# EUROPEAN PATENT APPLICATION

(11) **EP 3 527 414 A1**
(43) Date of publication of application: **21.08.2019**
(21) Application number: 16919342.2
(22) Date of filing: 02.11.2016
(51) Int. Cl.: B60K 7/00, F16H 1/20, F16H 57/021

(54) **IN-WHEEL MOTOR DRIVE DEVICE**

(30) Priority: 17.10.2016 JP 2016203425
(71) Applicant: NTN Corporation, Osaka-shi, Osaka 550-0003 (JP)
(72) Inventor: TAIKOU, Shinya, Iwata-shi Shizuoka 438-8510 (JP); TAMURA, Shiro, Iwata-shi Shizuoka 438-8510 (JP); UOZUMI, Tomohisa, Iwata-shi Shizuoka 438-8510 (JP)
(74) Representative: Grünecker Patent- und Rechtsanwälte PartG mbB
(86) International application number: PCT/JP2016/082713
(87) International publication number: WO 2018/073976

(57) **Abstract**

Provided is an in-wheel motor drive device (21) including: a motor (28); a wheel bearing (53) ; and a speed reducer (38). The speed reducer (38) includes: a speed reducer input shaft (Sᵢₙ) having an input gear (34); a speed reducer output shaft (Sₒᵤₜ) having an output gear (37) ; and an intermediate shaft (Sₘ) including: a first intermediate gear (35) and a second intermediate gear (36). The speed reducer input shaft (Sᵢₙ) and the speed reducer output shaft (Sₒᵤₜ) are arranged with offset in a direction orthogonal to an axial direction so that the input gear (34) and the output gear (37) are prevented from being superimposed with each other as viewed in the axial direction.

## Description

### Technical Field

The present invention relates to an in-wheel motor drive device, in which a rotation shaft of a motor and a wheel bearing are coupled to each other through intermediation of a speed reducer.

### Background Art

In an in-wheel motor drive device, a speed reducer is used for downsizing of a motor, thereby being capable of achieving downsizing and reduction in weight of the in-wheel motor drive device as a whole and reduction in unsprung weight. This is because of the following reason. Output torque of the motor is proportional to a size and a weight of the motor. Thus, in order to generate torque which is required for drive of a vehicle solely by a motor, a motor having a large size is required. However, the weight and volume of the motor which are reduced through use of the speed reducer exceed those of the speed reducer.

For example, in Patent Literature 1 described below, there is disclosed an in-wheel motor drive device including a two-shaft one-stage parallel shaft gear speed reducer. This speed reducer includes an input gear and an output gear. The input gear rotates integrally with a rotation shaft of a motor. The output gear meshes with the input gear and rotates integrally with a rotation ring of a wheel bearing.

Moreover, in Patent Literature 2 described below, there is disclosed an in-wheel motor drive device including a three-shaft two-stage parallel shaft gear speed reducer. This speed reducer includes an intermediate shaft. The intermediate shaft is arranged between an input gear and an output gear, and includes a first counter gear and a second counter gear. The input gear and the first counter gear form a gear train on an input side, and the output gear and the second counter gear form a gear train on an output side. Rotation of the motor is reduced in speed through intermediation of those gear trains in two stages.

### Citation List

Patent Literature 1: JP 2013-209016 A
Patent Literature 2: JP 2014-46742 A

### Summary of Invention

### Technical Problem

In the two-shaft one-stage parallel shaft gear speed reducer disclosed in Patent Literature 1 described above, in order to increase a speed reduction ratio thereof, it is required that a pitch circle diameter of the output gear be set larger than a pitch circle diameter of the input gear. When the pitch circle diameter of the output gear is set larger as described above, the input gear meshing with the output gear is arranged with large offset with respect to a wheel center. As a result, a stator portion of the motor arranged coaxially with the input gear protrudes on a radially outer side with respect to a space on an inner periphery of the wheel (hereinafter referred to as "wheel inner space"), and there is a fear in that the in-wheel motor drive device interferes with a vehicle body or suspension parts.

Meanwhile, in the three-shaft two-stage parallel shaft gear speed reducer disclosed in Patent Literature 2 described above, the counter gear is interposed between the input gear and the output gear, thereby being capable of increasing the speed reduction ratio while suppressing the pitch circle diameter of the output gear. However, in the speed reducer of Patent Literature 2, the rotation shaft having the input gear and the rotation shaft having the output gear are arrayed coaxially with each other, and the input gear and the output gear are arranged close to each other in the axial direction. In this case, there is no sufficient space on the out-board side of the input gear. As a result, other parts cannot be arranged in this space, and hence design of the in-wheel motor drive device is limited. When the input gear and the output gear are separated apart from each other in the axial direction to define a space therebetween, the speed reducer is increased in size in the axial direction, which may result in increase in size of the in-wheel motor drive device.

In view of the foregoing, the present invention has an object to enhance a degree of freedom in design without increase in size in an in-wheel motor drive device comprising a three-shaft two-stage parallel shaft gear speed reducer.

### Solution to Problem

According to one embodiment of the present invention, which has been devised to achieve the above-mentioned object, there is provided an in-wheel motor drive device, comprising: a motor; a wheel bearing; and a speed reducer configured to connect the motor and the wheel bearing to each other, the speed reducer being formed of a three-shaft two-stage parallel shaft gear speed reducer comprising: a speed reducer input shaft, which is configured to rotate integrally with a rotation shaft of the motor, and comprises an input gear; a speed reducer output shaft, which is configured to rotate integrally with a rotation ring of the wheel bearing, and comprises an output gear; and an intermediate shaft comprising: a first intermediate gear configured to mesh with the input gear; and a second intermediate gear configured to mesh with the output gear, wherein the speed reducer input shaft and the speed reducer output shaft are arranged with offset in a direction orthogonal to an axial direction so that the input gear and the output gear are prevented from being superimposed with each other as viewed in the axial direction.

As described above, according to one embodiment of the present invention, in the three-shaft two-stage parallel shaft gear speed reducer, the speed reducer input shaft and the speed reducer output shaft are arranged with offset so that the input gear and the output gear are prevented from being superimposed with each other as viewed in the axial direction. With this configuration, even when the input gear and the output gear are arranged close to each other in the axial direction, the output gear is prevented from being arranged adjacent to the input gear on the out-board side, and a space is defined on the out-board side of the input gear. Through use of this space, the in-wheel motor drive device can be designed with a wider variety.

In the in-wheel motor drive device described above, it is preferred that a gear train on an input side, which comprises the input gear and the first intermediate gear, be arranged on an in-board side with respect to a gear train on an output side, which comprises the output gear and the second intermediate gear. As described above, when the gear train on the input side is arranged close to the in-board side, a larger space can be secured on the out-board side of the input gear. Moreover, when the gear train on the output side is arranged close to the out-board side, an axial distance between the torque input portion (output gear) and the torque output portion (connection portion between the wheel bearing and the rotation ring) on the speed reducer output shaft is reduced. Thus, torsional rigidity is improved. As a result, a response of driving force with respect to output fluctuation is improved.

For example, as in the in-wheel motor drive device disclosed in Patent Literature 2 described above, when the output gear is adjacent to the input gear on the out-board side, a bearing cannot be provided on the out-board side of the input gear. Therefore, the rotation shaft of the input gear is supported in a cantilever state by only the bearing on the in-board side. In contrast, in the in-wheel motor drive device according to the present invention, a space is provided on the out-board side of the input gear, and hence a bearing configured to support the speed reducer input shaft can be provided in this space. With this, bearings can be provided on both sides of the input gear in the axial direction, and the speed reducer input shaft can be supported at both ends with those bearings. Therefore, the rigidity of the speed reducer input shaft is improved, thereby being capable of suppressing occurrence of vibrations.

When the gear train on the input side is arranged on the in-board side with respect to the gear train on the output side as described above, the first bearing configured to support the out-board-side end portion of the speed reducer input shaft can be arranged on the in-board side with respect to the second bearing configured to support the out-board-side end portion of the intermediate shaft. With this, the axial length of the speed reducer input shaft is reduced, thereby being capable of achieving reduction in weight and cost of the speed reducer input shaft and downsizing of the in-wheel motor drive device.

In the space on the out-board side of the input gear, there may be provided a rotary pump. The rotary pump comprises a rotor configured to rotate integrally with the rotation shaft of the motor, and is configured to pump lubricating oil to relevant portions . Moreover, in the space on the out-board side of the input gear, there may be provided a parking lock mechanism comprising a rotation member and a locking member. The rotation member is configured to rotate integrally with the speed reducer input shaft. The locking member is configured to restrict rotation of the speed reducer input shaft through engagement with the rotation member.

The wheel bearing may be, for example, a wheel bearing of an inner-ring rotation type.

### Advantageous Effects of Invention

As described above, with the in-wheel motor drive device according to the present invention, the space on the out-board side of the input gear can be effectively used. Therefore, the degree of freedom in design can be enhanced without increase in size.

### Brief Description of Drawings

FIG. 1 is a sectional view of an in-wheel motor drive device according to one embodiment of the present invention, and is a sectional view taken along a line passing through Y-O2-Y of FIG. 2.
FIG. 2 is a sectional view of the in-wheel motor drive device described above, and is an illustration of a cross section taken along the line X-X of FIG. 1, when viewed in a direction indicated by the arrows (from in-board side).
FIG. 3 is a perspective view for illustrating another example of a first intermediate gear (and second intermediate gear).
FIG. 4 is a sectional view of an in-wheel motor drive device according to another embodiment of the present invention.
FIG. 5 is a sectional view of the in-wheel motor drive device comprising a rotary pump.
FIG. 6 is a sectional view of the rotary pump of FIG. 5 taken along the line Z-Z.
FIG. 7 is a sectional view of the in-wheel motor drive device comprising a parking lock mechanism.
FIG. 8 is a front view of the parking lock mechanism of FIG. 7 as viewed in an axial direction, and is an illustration of a locked state in which a rotation member and a locking member are engaged with each other.
FIG. 9 is a front view of the parking lock mechanism of FIG. 7 as viewed in the axial direction, and is an illustration of an unlocked state in which the rotation member and the locking member are not engaged with each other.
FIG. 10 is a plan view for illustrating a schematic configuration of an electric vehicle on which in-wheel motor drive devices are mounted.
FIG. 11 is a rear sectional view of the electric vehicle of FIG. 10.

### Description of Embodiments

An in-wheel motor drive device according to one embodiment of the present invention is described in detail with reference to the drawings.

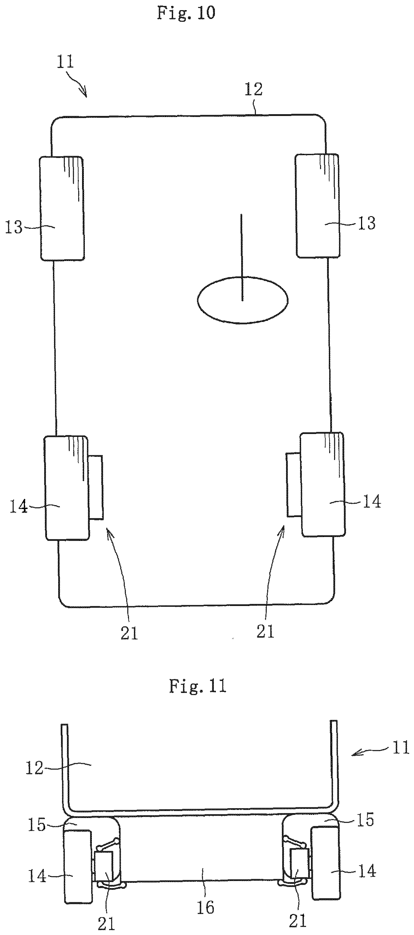

As illustrated in FIG. 10, an electric vehicle 11 comprises a chassis 12, front wheels 13 serving as steered wheels, rear wheels 14 serving as driving wheels, and in-wheel motor drive devices 21 configured to transmit driving force to the rear wheels 14. As illustrated in FIG. 11, each rear wheel 14 and each in-wheel motor drive device 21 are accommodated inside a wheel housing 15 of the chassis 12 and fixed below the chassis 12 via a suspension device (suspension) 16.

In the suspension device 16, horizontally extending suspension arms are configured to support the rear wheels 14, and a strut comprising a coil spring and a shock absorber is configured to absorb vibrations that each rear wheel 14 receives from the ground to suppress the vibrations of the chassis 12. In addition, a stabilizer configured to suppress tilting of a vehicle body during turning and other operations is provided at connecting portions of the right and left suspension arms. In order to improve a property of following irregularities of a road surface to transmit the driving force of the rear wheels 14 to the road surface efficiently, the suspension device 16 is an independent suspension type capable of independently moving the right and left wheels up and down.

The electric vehicle 11 does not need to comprise amotor, a drive shaft, a differential gear mechanism, and other components on the chassis 12 because the in-wheel motor drive devices 21 configured to drive the right and left rear wheels 14, respectively, are arranged inside the wheel housings 15. Accordingly, the electric vehicle 11 has advantages in that a large passenger compartment space can be provided and that rotation of the right and left rear wheels 14 can be controlled, respectively.

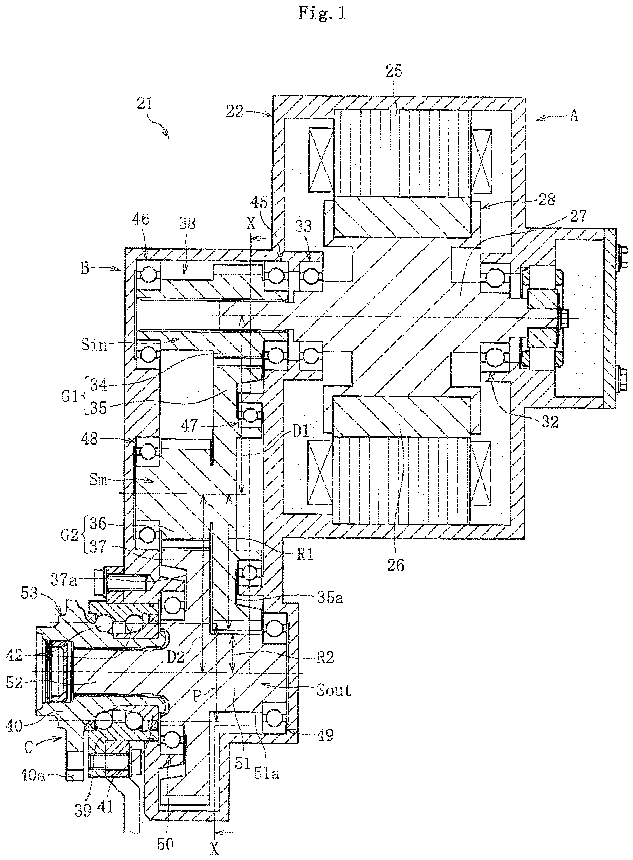

Prior to the description of a characteristic configuration of this embodiment, an overall configuration of the in-wheel motor drive device 21 is described with reference to FIG. 1. In the following description, under a state in which the in-wheel motor drive device 21 is mounted to the vehicle body, a side closer to an outer side of the vehicle body is referred to as "out-board side" (left side in FIG. 1), and a side closer to a center of the vehicle body is referred to as "in-board side" (right side in FIG. 1) .

The in-wheel motor drive device 21 comprises a drive section A configured to generate driving force, a speed reduction section B configured to reduce a speed of rotation of the drive section A to output the rotation, and a bearing section C configured to transmit the output from the speed reduction section B to the wheels serving as driving wheels. The drive section A, the speed reduction section B, and the bearing section C are accommodated in a housing 22. The housing 22 may have a unified structure as illustrated in FIG. 1, or may have a dividable structure.

The drive section A is a radial gap type electric motor 28 comprising a stator 25 fixed to the housing 22, a rotor 26 arranged on a radially inner side of the stator 25 at an opposed position with a gap, and a motor rotation shaft 27, which is arranged on a radially inner side of the rotor 26 so as to rotate integrally with the rotor 26. The motor rotation shaft 27 is rotatable at high speed of ten thousand rotations or more per minute. The stator 25 is formed by winding a coil around an outer periphery of a magnetic core, and the rotor 26 is formed of a magnetic body such as a permanent magnet. The motor rotation shaft 27 is supported at its in-board-side end portion by a rolling bearing 32 and at its out-board-side end portion by a rolling bearing 33 so as to be freely rotatable with respect to the housing 22.

The speed reduction section B is formed of a three-shaft two-stage parallel shaft gear speed reducer 38 comprising a speed reducer input shaft Sᵢₙ, an intermediate shaft Sₘ, and a speed reducer output shaft Sₒᵤₜ. The speed reducer input shaft Sᵢₙ integrally comprises an input gear 34. The intermediate shaft Sₘ integrally comprises a first intermediate gear 35 and a second intermediate gear 36. The speed reducer output shaft Sₒᵤₜ integrally comprises an output gear 37. The first intermediate gear 35 and the second intermediate gear 36 are provided integrally and coaxially with each other. The input gear 34 and the first intermediate gear 35 mesh with each other to form a gear train G1 on the input side. The input gear 34 is a drive gear of the gear train G1 on the input side. The input gear 34 has a pitch circle diameter smaller than that of the first intermediate gear 35, and has the smaller number of teeth. Moreover, the second intermediate gear 36 and the output gear 37 mesh with each other to form a gear train G2 on the output side. The second intermediate gear 36 is a drive gear of the gear train G2 on the output side. The second intermediate gear 36 has a pitch circle diameter smaller than that of the output gear 37, and has the smaller number of teeth. The gear trains G1 and G2 each have a speed reduction ratio of equal to or larger than 2.5 and equal to or smaller than 7. Values of the speed reduction ratios of the gear trains G1 and G2 are set relatively close to each other. For example, a ratio of the speed reduction ratios of the gear trains G1 and G2 is set to equal to or larger than 0.5 and equal to or smaller than 2, preferably, equal to or larger than 0.8 and equal to or smaller than 1.2. Through intermediation of the gear trains G1 and G2 in two stages, a rotary motion of the motor rotation shaft 27 is reduced in speed with a predetermined speed reduction ratio.

The speed reducer input shaft Sᵢₙ is coaxially mounted to the motor rotation shaft 27 on the out-board side by spline fitting. The speed reducer input shaft Sᵢₙ is supported at its both ends by rolling bearings 45 and 46 on both sides of the input gear 34 in the axial direction. In the illustrated example, the in-board-side end portion of the speed reducer input shaft Sᵢₙ is supported on the housing 22 by the rolling bearing 45 so as to be freely rotatable, and the out-board-side end portion of the speed reducer input shaft Sᵢₙ is supported on the housing 22 by the rolling bearing 46 so as to be freely rotatable. The speed reducer input shaft Sᵢₙ may be formed integrally with the motor rotation shaft 27. In this case, any one of the bearing 33 configured to support the out-board-side end portion of the motor rotation shaft 27 and the bearing 45 configured to support the in-board-side end portion of the speed reducer input shaft Sᵢₙ may be omitted.

The intermediate shaft Sₘ is supported at its in-board-side end portion on the housing 22 by a rolling bearing 47 so as to be freely rotatable, and is supported at its out-board-side end portion on the housing 22 by a rolling bearing 48 so as to be freely rotatable.

The speed reducer output shaft Sₒᵤₜ comprises a main body portion 51 and a connection portion 52. The main body portion 51 comprises the output gear 37. The connection portion 52 is provided integrally with the main body portion 51 on the out-board side. The speed reducer output shaft Sₒᵤₜ is supported on the housing 22 by rolling bearings 49 and 50 so as to be freely rotatable. In the illustrated example, both ends of the main body portion 51 of the speed reducer output shaft Sₒᵤₜ in the axial direction are supported by the rolling bearings 49 and 50. With this, the speed reducer output shaft Sₒᵤₜ which bears large torque can be supported with a sufficient bearing span, thereby being capable of obtaining high support rigidity.

In this embodiment, helical gears are used as the gears 34 to 37 forming the parallel shaft gear speed reducer 38. With the helical gears, the number of teeth which are simultaneously in mesh becomes larger, and teeth contact is dispersed. Therefore, the helical gears are effective in quietness and less torque fluctuation. In consideration of a meshing ratio and a limit rotation number of the gears, it is preferred that modules of the gears be set to from 1 to 3.

The bearing section C is formed of a wheel bearing 53 of an inner-ring rotation type. The wheel bearing 53 is a double-row angular contact ball bearing mainly comprising an outer ring 39, an inner member, a plurality of rolling elements 42, and a retainer. The outer ring 39 is fixed to the housing 22 and serves as an outer member. The inner member is arranged on an inner periphery of the outer ring 39. The plurality of rolling elements 42 are arranged between the inner member and the outer ring 39. The retainer is configured to retain the rolling elements 42. In the illustrated example, the inner member comprises a hub ring 40 and an inner ring 41 press-fitted to an outer periphery of the hub ring 40. A raceway surface is formed on an outer peripheral surface of each of the hub ring 40 and the inner ring 41. Double-row raceway surfaces are formed on an inner peripheral surface of the outer ring 39. The hub ring 40 integrally comprises a flange 40a. A brake rotor and a wheel are connected to the flange 40a by hub bolts.

The connection portion 52 of the speed reducer output shaft Sₒᵤₜ is connected to a rotation ring of the wheel bearing 53. In this embodiment, the connection portion 52 of the speed reducer output shaft Sₒᵤₜ is inserted along an inner periphery of the hub ring 40 of the wheel bearing 53 so that the connection portion 52 and the hub ring 40 of the wheel bearing 53 are connected to each other by spline fitting in a torque-transmittable manner. The fitting of the spline fitting portion connecting between the connection portion 52 of the speed reducer output shaft Sₒᵤₜ and the hub ring 40 of the wheel bearing 53 is in a state of clearance fitting in which a gap is defined between tooth surfaces opposed to each other and between tooth bottoms and tooth tops opposed to each other so that the hub ring 40 and the speed reducer output shaft Sₒᵤₜ are slightly movable relative to each other in the radial direction. With this, vibrations that each wheel receives from the ground are absorbed by the gap in the spline fitting portion, thereby being capable of suppressing vibrations received by the parallel shaft gear speed reducer 38 and the motor 28.

Grease is interposed between opposed tooth surfaces in the spline fitting portion of the connection portion 52 of the speed reducer output shaft Sₒᵤₜ and the hub ring 40 of the wheel bearing 53. For example, when the grease is applied to one or both of splines of the connection portion 52 of the speed reducer output shaft Sₒᵤₜ and the hub ring 40 and thereafter the connection portion 52 of the speed reducer output shaft Sₒᵤₜ is inserted along the inner periphery of the hub ring 40, the grease is interposed between the tooth surfaces in the spline fitting portion. Moreover, the grease is interposed also between the raceway surface of the outer ring 39 of the wheel bearing 53 and the rolling elements 42 and between the hub ring 40 or the raceway surface of the inner ring 41 and the rolling elements 42.

Meanwhile, lubricating oil is sealed inside the housing 22. At the time of drive of the in-wheel motor drive device 21, the lubricating oil in the housing 22 is pumped by an oil pump (for example, rotary pump) (not shown), and thus is fed to the bearings and gears. With this, the bearings and gears are cooled and lubricated. The space in which the lubricating oil is sealed and the space in which the grease is sealed, are partitioned by a sealing device (not shown) provided at the out-board-side end portion of the rolling bearing 50.

The in-wheel motor drive device 21 is accommodated inside the wheel housing 15 (see FIG. 11), and thus becomes unsprung load. Therefore, downsizing and reduction in weight thereof are required. Thus, through combination of the parallel shaft gear speed reducer 38 and the motor 28, the small-sized motor 28 with low torque and high-speed rotation can be used. For example, in a case in which the parallel shaft gear speed reducer 38 having a speed reduction ratio of 11 is used, the small-sizedmotor 28 with high-speed rotation of about ten and several thousand rotations per minute can be used. As described above, through downsizing of the motor 28, the compact in-wheel motor drive device 21 can be achieved. As a result, the unsprung weight is suppressed, thereby being capable of obtaining the electric vehicle 11 which is excellent in traveling stability and NVH characteristics.

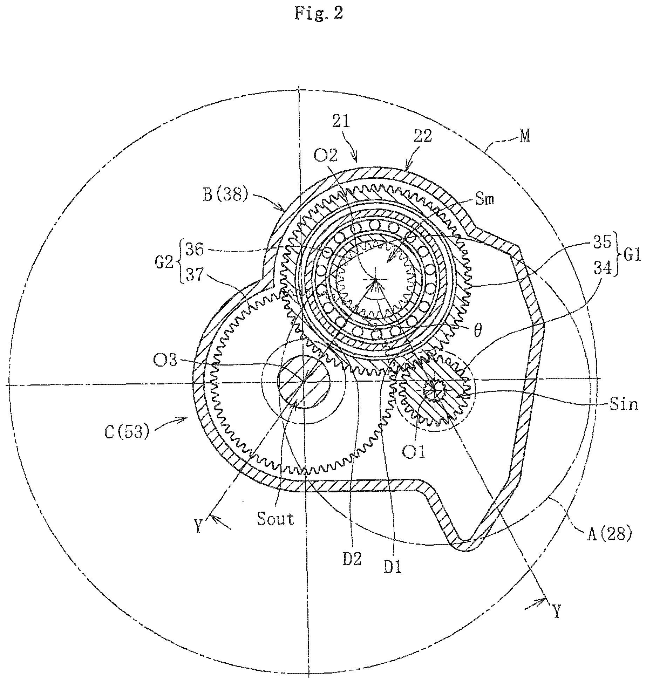

Next, the characteristic configuration of the in-wheel motor drive device 21 according to this embodiment, in particular, arrangement of members forming the parallel shaft gear speed reducer 38 is described in detail with reference to FIG. 1 and FIG. 2. The reference symbol M given in FIG. 2 denotes a radially outer end of the wheel inner space.

As illustrated in FIG. 2, in the parallel shaft gear speed reducer 38, the speed reducer input shaft Sᵢₙ and the speed reducer output shaft Sₒᵤₜ are arranged with offset in a direction orthogonal to the axial direction so that the input gear 34 and the output gear 37 are prevented from being superimposed with each other as viewed in the axial direction. Specifically, the speed reducer input shaft Sᵢₙ and the speed reducer output shaft Sₒᵤₜ are arranged with offset in the direction orthogonal to the axial direction by an amount larger than a total of a circumradius of the input gear 34 and a circumradius of the output gear 37. In this embodiment, as illustrated in FIG. 1, the input gear 34 and the output gear 37 are arranged close to each other in the axial direction. However, when the speed reducer input shaft Sᵢₙ and the speed reducer output shaft Sₒᵤₜ are arranged with offset as described above, a space is provided on the out-board side of the input gear 34. Through use of this space, the in-wheel motor drive device 21 can be designed with a wider variety.

In particular, in this embodiment, the gear train G1 on the input side is arranged on the in-board side with respect to the gear train G2 on the output side. When the gear train G1 on the input side is arranged close to the in-board side as described above, a larger space including an axial region of the gear train G2 on the output side is secured on the out-board side of the input gear 34. Moreover, when the gear train G2 on the output side is arranged close to the out-board side, an axial distance on the speed reducer output shaft Sₒᵤₜ between the output gear 37 being the torque input portion and the connection portion 52 being the torque output portion (connection portion with respect to the rotation ring of the wheel bearing 53) is reduced. With this, the torsional rigidity is improved. As a result, a response of the driving force with respect to output fluctuation is improved.

In this embodiment, the bearing 46 configured to support the out-board-side end portion of the speed reducer input shaft Sᵢₙ is provided in the space on the out-board side of the input gear 34. Moreover, the in-board-side end portion of the speed reducer input shaft Sᵢₙ is supported by the bearing 45. With this, the speed reducer input shaft Sᵢₙ is supported at its both ends by the bearings 45 and 46 on both sides of the input gear 34 in the axial direction. Thus, the rigidity of the speed reducer input shaft Sᵢₙ is improved, thereby being capable of suppressing occurrence of the vibrations of the speed reducer input shaft Sᵢₙ.

As illustrated in FIG. 2, the in-wheelmotor drive device 21 is accommodated in a radial region of the wheel inner space M. When the speed reducer input shaft Sᵢₙ and the speed reducer output shaft Sₒᵤₜ are arranged with offset as described above, the speed reducer input shaft Sᵢₙ, the intermediate shaft Sₘ, and the speed reducer output shaft Sₒᵤₜ are arranged so as to form a triangular shape as viewed in the axial direction. In the illustrated example, the speed reducer output shaft Sₒᵤₜ and the speed reducer input shaft Sᵢₙ are provided at substantially the same height, and the intermediate shaft Sₘ is provided above the speed reducer output shaft Sₒᵤₜ and the speed reducer input shaft Sᵢₙ. The speed reducer input shaft Sᵢₙ and the speed reducer output shaft Sₒᵤₜ are arranged so as to be superimposed with each other in the direction orthogonal to the axial direction (see FIG. 1) . With this, an axial dimension of the in-wheel motor drive device 21 is reduced, and hence a projection amount of the in-wheel motor drive device 21 from the wheel inner space M toward the in-board side can be suppressed, thereby being capable of avoiding interference between the vehicle body and the suspension device.

Moreover, in the three-shaft two-stage parallel shaft gear speed reducer 38, the intermediate shaft Sₘ comprising the first intermediate gear 35 and the second intermediate gear 36 is provided between the speed reducer input shaft Sᵢₙ and the speed reducer output shaft Sₒᵤₜ. Therefore, the speed reduction ratio of the speed reducer as a whole can be increased while suppressing a pitch circle diameter (outer diameter) of the output gear 37. In particular, in this embodiment, as illustrated in FIG. 1, the first intermediate gear 35 is increased in diameter to such a limit that a circumscribed circle (radially outermost portion) of the first intermediate gear 35 is superimposed with a pitch circle P of the wheel bearing 53, that is, a cylindrical plane passing through centers of the rolling elements 42 as viewed in the axial direction. With this, the speed reduction ratio of equal to or larger than 10 is achieved while suppressing the pitch circle diameter of the output gear 37.

As described above, also in a case in which the pitch circle diameter of the output gear 37 is suppressed, and thus the input gear 34 and the output gear 37 are arranged with offset so as to be prevented from being superimposed with each other as viewed in the axial direction, an amount of offset of a center O1 of the motor 28 (center of the input gear 34) with respect to a wheel center O3 (center of the output gear 37) can be suppressed (see FIG. 2). Thus, the motor 28 can easily be accommodated within the radial region of the wheel inner space M, including the stator 25 and the housing 22 retaining the stator 25.

A lower arm ball joint (not shown) configured to mount the in-wheel motor drive device 21 to the suspension device 16 is provided below the in-wheel motor drive device 21. In this embodiment, the pitch circle diameter of the output gear 37 is suppressed as described above. Therefore, a sufficient space for providing the lower arm ball joint can be secured below the output gear 37.

It is preferred that the speed reducer input shaft Sᵢₙ and the speed reducer output shaft Sₒᵤₜ be arranged as close as possible in the direction orthogonal to the axial direction within a range in which the input gear 34 and the output gear 37 are prevented from being superimposed with each other as viewed in the axial direction. In this embodiment, as illustrated in FIG. 2, an angle θ between a line connecting the center of the speed reducer input shaft Sᵢₙ (that is, center 01 of the motor) and a center O2 of the intermediate shaft Sₘ and a line connecting the center of the speed reducer output shaft Sₒᵤₜ (that is, wheel center O3) and the center 02 of the intermediate shaft Sₘ is equal to or smaller than 90°. In the illustrated example, a center distance D1 between the speed reducer input shaft Sᵢₙ and the intermediate shaft Sₘ and a center distance D2 between the speed reducer output shaft Sₒᵤₜ and the intermediate shaft Sₘ is substantially equal to each other, and a ratio between the center distance D1 and the center distance D2 falls within, for example, a range of from 0.8 to 1.2. With this, the speed reducer input shaft Sᵢₙ, the intermediate shaft Sₘ, and the speed reducer output shaft Sₒᵤₜ are arranged in a compact manner to form a substantially isosceles triangle or a substantially equilateral triangle as in the illustrated example, as viewed in the axial direction. Therefore, the motor 28 can be more easily accommodated in the radial region of the wheel inner space M.

In the parallel shaft gear speed reducer 38 described above, as illustrated in FIG. 1, a sum of a radius R1 of the circumscribed circle of the first intermediate gear 35 and a radius R2 of an outer peripheral surface of a cylindrical portion 51a of the speed reducer output shaft Sₒᵤₜ adjacent to the output gear 37 on the in-board side is smaller than the center distance D2 between the intermediate shaft Sₘ and the speed reducer output shaft Sₒᵤₜ (R1+R2<D2). With this, a radially outer end of the first intermediate gear 35 separates from the cylindrical portion 51a of the speed reducer output shaft Sₒᵤₜ, and hence interference therebetween is avoided. In this embodiment, the pitch circle diameter of the first intermediate gear 35 is smaller than the pitch circle diameter of the output gear 37, and hence the dimensional relationship described above can easily be achieved. As long as the dimensional relationship described above can be achieved, the pitch circle diameter of the first intermediate gear 35 may be equal to or larger than the pitch circle diameter of the output gear 37.

In this embodiment, a recess portion 35a having an annular shape is formed in an end surface of the first intermediate gear 35 on the in-board side, and at least a part of the axial region (in the illustrated example, the entirety of the axial region) of the rolling bearing 47 is accommodated in the recess portion 35a. Moreover, a recess portion 37a is formed in an end surface of the output gear 37 on the out-board side, and at least a part of the axial region (in the illustrated example, the entirety of the axial region) of the rolling bearing 50 is accommodated in the recess portion 37a. As described above, when the gears 35 and 37 and the bearings 47 and 50 configured to support the gears 35 and 37 are arranged so as to be superimposed with each other in the direction orthogonal to the axial direction, the axial dimension of the parallel shaft gear speed reducer 38 and the axial dimension of the in-wheel motor drive device 21 can be reduced.

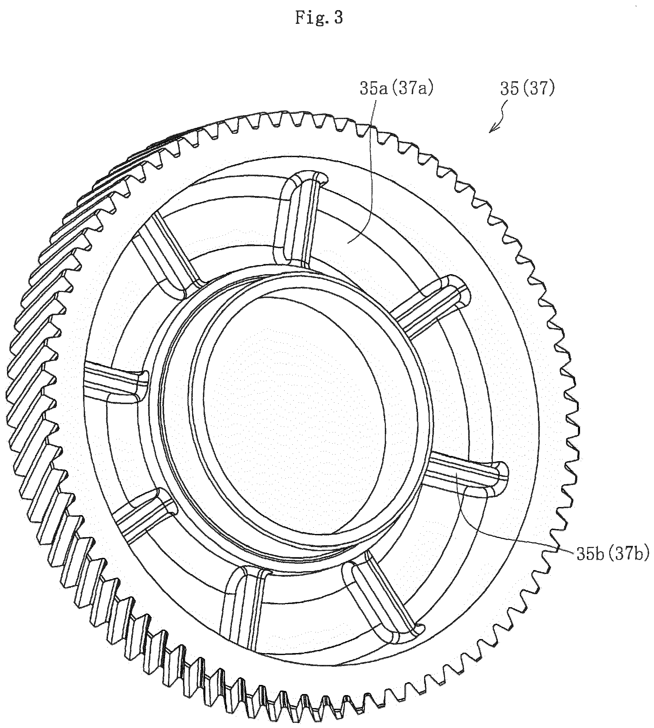

As described above, when the recess portions 35a and 37a are formed in the end surfaces of the first intermediate gear 35 and the output gear 37, as illustrated in FIG. 3, ribs 35b and 37b may be provided in the recess portions 35a and 37a. In the example illustrated in FIG. 3, a plurality of ribs 35b and 37b extending in the radial direction are provided in a radial arrangement in the recess portions 35a and 37a of the end surfaces of the first intermediate gear 35 and the output gear 37. With this configuration, the strength of the first intermediate gear 35 and the output gear 37 is enhanced. In this case, the rolling bearings 47 and 50 are arranged at positions not interfering with the ribs 35b and 37b.

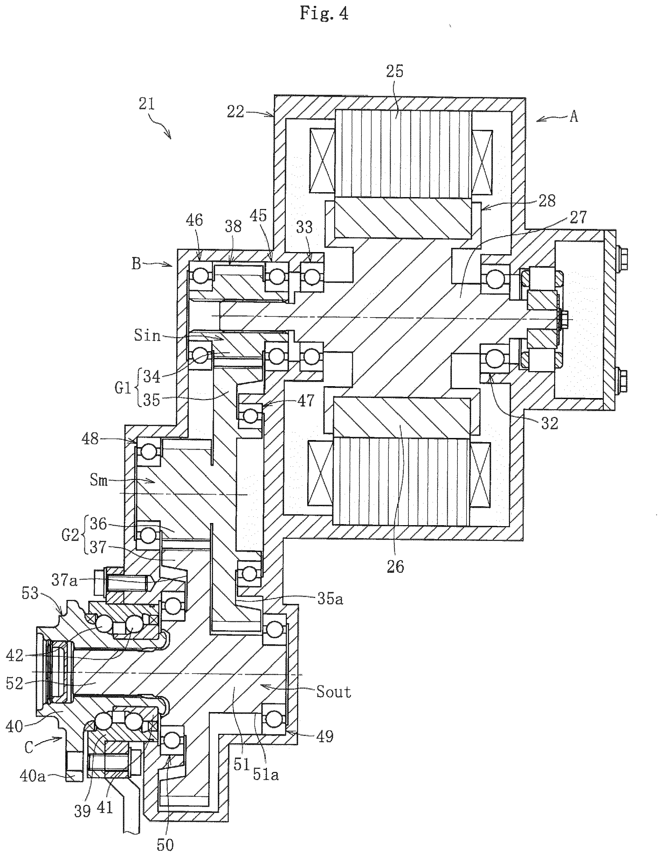

The present invention is not limited to the embodiment described above. For example, as illustrated in FIG. 4, the bearing 46 (the first bearing) configured to support the out-board-side end portion of the speed reducer input shaft Sᵢₙ may be arranged on the in-board side with respect to the bearing 48 (the second bearing) configured to support the out-board-side end portion of the intermediate shaft Sₘ. In the illustrated example, the entirety of the axial region of the bearing 46 configured to support the out-board-side end portion of the speed reducer input shaft Sᵢₙ is arranged within the axial region of the gear train G2 on the output side . With this configuration, the axial length of the speed reducer input shaft Sᵢₙ can be reduced, thereby being capable of achieving reduction in weight of the speed reducer input shaft Sᵢₙ and reduction in cost.

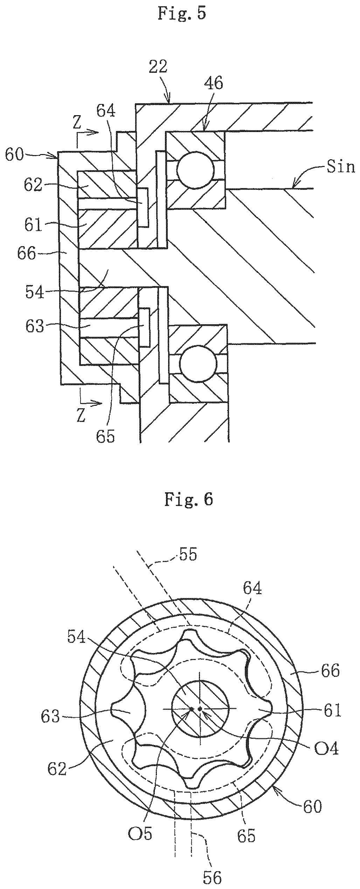

Moreover, a rotary pump 60 (for example, a cycloid pump) may be provided in the space on the out-board side of the input gear 34. As illustrated in FIG. 5 and FIG. 6, the rotary pump 60 comprises, for example, an inner rotor 61, an outer rotor 62, a pump chamber 63 defined between the inner rotor 61 and the outer rotor 62, an ejection port 64 communicating to an oil passage 55, a suction port 65 communicating to an oil passage 56, and a cover 66. The inner rotor 61 is fixed to a projection portion 54 projecting from an axial center of the out-board-side end portion of the speed reducer input shaft Sᵢₙ, and is configured to rotate integrally with the speed reducer input shaft Sᵢₙ.

The inner rotor 61 is provided coaxially and integrally with the motor rotation shaft 27 and the speed reducer input shaft Sᵢₙ, and is driven to rotate by the motor rotation shaft 27. Meanwhile, the outer rotor 62 rotates so as to follow rotation of the inner rotor 61. The inner rotor 61 rotates about a rotation center 04, and the outer rotor 62 rotates about a rotation center 05. The inner rotor 61 and the outer rotor 62 rotate about the different rotation centers 04 and 05, and hence the volume of the pump chamber 63 continuously changes. With this, the lubricating oil having flowed in from the oil passage 56 through the suction port 65 is pumped to the oil passage 55 through the ejection port 64 and fed to relevant portions. When the number of the teeth of the inner rotor 61 is "n", the number of the teeth of the outer rotor 62 is (n+1). In this embodiment, n=7 is given.

As described above, when the rotary pump 60 is arranged in the space on the out-board side of the input gear 34, specifically, the space between the housing 22 and a brake rotor (not shown) in the axial direction, the dead space is utilized, thereby being capable of achieving downsizing of the in-wheel motor drive device 21. Moreover, the rotary pump 60 is driven by the rotation of the speed reducer input shaft Sᵢₙ, and hence another drive mechanism is not required. Therefore, reduction in the number of components can be achieved.

The rotary pump 60 is supported in a cantilever state by the bearing 46 provided on the in-board side. However, the rotary pump 60 involves low torque. Thus, the rotary pump 60 can be stably supported even in a cantilever state. Moreover, as illustrated in FIG. 4, it is preferred that the bearing 46 configured to support the out-board-side end portion of the speed reducer input shaft Sᵢₙ be arranged close to the in-board side and that the rotary pump 60 be arranged in the space defined thereby. With this, extension of the in-wheel motor drive device 21 toward the out-board side due to the presence of the rotary pump 60 can be suppressed.

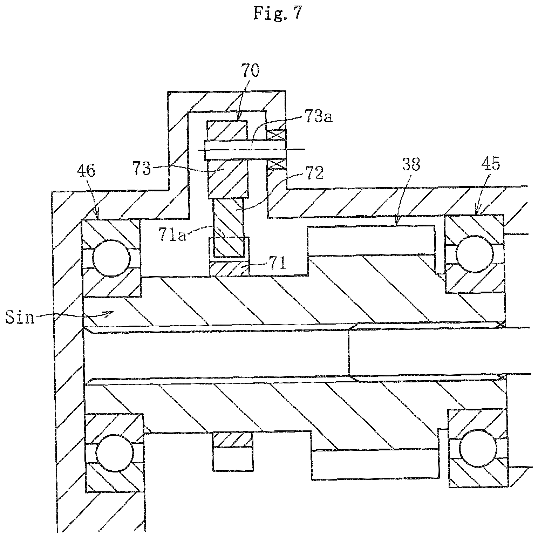

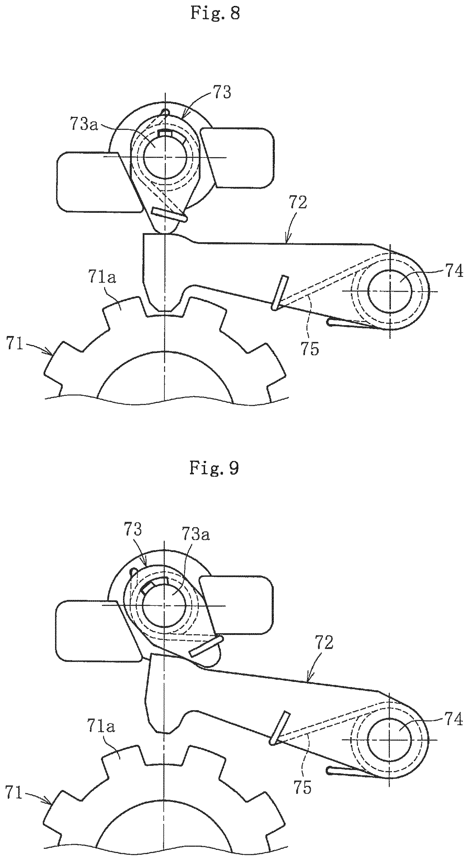

Moreover, a parking lock mechanism 70 configured to restrict rotation of the input gear 34 may be provided in the space on the out-board side of the input gear 34. As illustrated in FIG. 7 and FIG. 8, the parking lock mechanism 70 mainly comprises a rotation member 71, a locking member 72, and drive means . The rotation member 71 is configured to rotate integrally with the speed reducer input shaft Sᵢₙ. The locking member 72 is engageable with the rotation member 71. The drive means is configured to drive the locking member 72.

The rotation member 71 comprises projection portions 71a projecting radially outward. In the illustrated example, the projection portions 71a are provided at a plurality of portions at equal intervals in the circumferential direction. The locking member 72 can be switched between a locked state of being engaged with the projection portion 71a of the rotation member 71 in the rotation direction (see FIG. 8) and an unlocked state of not being engaged with the projection portion 71a of the rotation member 71 in the rotation direction (see FIG. 9). In the illustrated example, a base end of the locking member 72 is rotatably mounted to the housing 22 through intermediation of a pin 74 (see FIG. 8) . When the locking member 72 is rotated about the pin 74 so that a distal end of the locking member 72 is moved up and down, the locking member 72 can be switched between the locked state and the unlocked state. The locking member 72 is urged by urging means 75 such as a spring toward a side on which the distal end thereof separates from the rotation member 71 (upper side in FIG. 8) . With this, the locking member 72 is always held in the unlocked state.

The drive means is configured to press the distal end of the locking member 72 toward a side of approaching the rotation member 71 (lower side in FIG. 8) . The drive means comprises, for example, a cam 73 capable of rotating about a pin 73a and a drive section (not shown) configured to drive the cam 73 to rotate. When the locking member 72 is pressed down by the cam 73 to be engaged with the rotation member 71, the locking member 72 is brought into the locked state in which the rotation of the rotation member 71 and the rotation of the speed reducer input shaft Sᵢₙ are restricted (see FIG. 8). Meanwhile, when the force of pressing the locking member 72 downward by the cam 73 is cancelled, the locking member 72 is rotated by the urging force of the urging means 75, and the distal end of the locking member 72 is separated from the rotation member 71. With this, the locking member 72 is brought into the unlocked state in which the engagement between the locking member 72 and the rotation member 71 is cancelled (see FIG. 9).

Through the engagement between the rotation member 71 and the locking member 72 of the parking lock mechanism 70, a certain amount of torque is applied to the rotation member 71 and a periphery thereof. Thus, as illustrated in FIG. 7, it is preferred that the bearings 45 and 46 be provided on both sides of the rotation member 71 in the axial direction to support the rotation member 71 at its both ends.

In the embodiment described above, description is made of the case in which the wheel bearing 53 is of the inner-ring rotation type. However, the present invention is not limited to this. A wheel bearing of an outer-ring rotation type may be used. In this case, the inner ring is a fixed ring fixed to the housing 22, and the outer ring is a rotation ring configured to rotate with respect to the inner ring. The hollow speed reducer output shaft is coupled to the outer peripheral surface of the outer ring by spline fitting in a torque-transmittable manner . The brake rotor and the rear wheel are connected to the flange provided to the outer ring.

Moreover, in the embodiment described above, illustration is given of the motor 28 of the radial gap type as the drive section A. However, a motor having a freely selected configuration can be applied. For example, a motor of an axial gap type in which the stator and the rotor are opposed to each other through a gap in the axial direction may be adopted.

Moreover, in the embodiment described above, as illustrated in FIG. 10 and FIG. 11, illustration is given of the electric vehicle 11 comprising the rear wheels 14 as driving wheels. However, the electric vehicle 11 may comprise the front wheels 13 as driving wheels, or may be a four-wheel drive vehicle. In Description, the "electric vehicle" encompasses all automobiles which obtain driving force from electric power, and may include, for example, a hybrid car.

The present invention is not limited to the above-mentioned embodiment. As a matter of course, the present invention may be carried out in various modes without departing from the gist of the present invention. The scope of the present invention is defined in the scope of claims, and encompasses equivalents described in claims and all changes within the scope of claims.

### Reference Signs List

- 21: in-wheel motor drive device
- 22: housing
- 27: motor rotation shaft
- 28: motor
- 34: input gear
- 35: first intermediate gear
- 36: second intermediate gear
- 37: output gear
- 38: speed reducer (parallel shaft gear speed reducer)
- 39: outer ring
- 40: hub ring
- 41: inner ring
- 53: wheel bearing
- 60: rotary pump
- 70: parking lock mechanism
- A: drive section
- B: speed reduction section
- C: bearing section
- Sᵢₙ: speed reducer input shaft
- Sₘ: intermediate shaft
- Sₒᵤₜ: speed reducer output shaft
- G1: gear train on input side
- G2: gear train on output side
- M: wheel inner space
- 01: center of motor (center of speed reducer input gear)
- O2: center of intermediate shaft
- O3: wheel center (center of speed reducer output gear)

## Claims

1. An in-wheel motor drive device, comprising:
a motor;
a wheel bearing; and
a speed reducer configured to connect the motor and the wheel bearing to each other, the speed reducer being formed of a three-shaft two-stage parallel shaft gear speed reducer comprising:
a speed reducer input shaft, which is configured to rotate integrally with a rotation shaft of the motor, and comprises an input gear;
a speed reducer output shaft, which is configured to rotate integrally with a rotation ring of the wheel bearing, and comprises an output gear; and
an intermediate shaft comprising:
a first intermediate gear configured to mesh with the input gear; and
a second intermediate gear configured to mesh with the output gear,
wherein the speed reducer input shaft and the speed reducer output shaft are arranged with offset in a direction orthogonal to an axial direction so that the input gear and the output gear are prevented from being superimposed with each other as viewed in the axial direction.

2. The in-wheel motor drive device according to claim 1, wherein a gear train on an input side, which comprises the input gear and the first intermediate gear, is arranged on an in-board side with respect to a gear train on an output side, which comprises the output gear and the second intermediate gear.

3. The in-wheel motor drive device according to claim 1 or 2, wherein the speed reducer comprises a bearing configured to support an out-board-side end portion of the speed reducer input shaft.

4. The in-wheel motor drive device according to claim 1 or 2, wherein the speed reducer comprises bearings configured to support both ends of the speed reducer input shaft in the axial direction.

5. The in-wheel motor drive device according to claim 2, wherein the speed reducer comprises:
a first bearing configured to support an out-board-side end portion of the intermediate shaft; and
a second bearing, which is arranged on the in-board side with respect to the first bearing, and is configured to support an out-board-side end portion of the speed reducer input shaft.

6. The in-wheel motor drive device according to any one of claims 1 to 5, further comprising a rotary pump, which is provided on an out-board side of the input gear, and comprises a rotor configured to rotate integrally with the speed reducer input shaft.

7. The in-wheel motor drive device according to any one of claims 1 to 6, further comprising a parking lock mechanism provided on the out-board side of the input gear,
the parking lock mechanism comprising:
a rotation member configured to rotate integrally with the speed reducer input shaft; and
a locking member configured to restrict rotation of the speed reducer input shaft through engagement with the rotation member.

8. The in-wheel motor drive device according to any one of claims 1 to 7, wherein the wheel bearing is of an inner-ring rotation type.
